# EUROPEAN PATENT APPLICATION

(11) **EP 1 528 290 A1**
(43) Date of publication of application: **04.05.2005**
(21) Application number: 03784644.1
(22) Date of filing: 11.08.2003
(51) Int. Cl.: F16H 55/06

(54) **RESIN GEAR**

(30) Priority: 09.08.2002 JP 2002233386
(71) Applicant: Koyo Seiko Co., Ltd., Osaka-shi, Osaka 542-0081 (JP)
(72) Inventor: Kurokawa, Takanori Koyo Seiko Co., Ltd., Osaka-shi, Osaka 542-0081 (JP)
(74) Representative: Steinmeister, Helmut
(86) International application number: PCT/JP2003/010204
(87) International publication number: WO 2004/015309

(57) **Abstract**

The present invention relates to a resin gear to be meshed with a gear made of metal or the like, more particularly to a resin gear, wherein crystalline resin is used for a base material and reinforced fiber and further a crystalline nucleating agent are added as additives added to the base material.

## Description

### FIELD OF THE INVENTION

The present invention relates to a resin gear, a meshing object of which is made of metal, more particularly to a resin gear including additives added to resin, which is a base material thereof, in order to improve the strength of the resin gear and for other purposes.

### BACKGROUND TECHNIQUE

A resin gear is used when a meshing object is a ball screw or gear made of metal, for example, in order to control a noise generated from the mesh engagement. When the resin gear is used even in severe environments in the range of the temperatures from -40°c through 120°c, it is necessary to ensure its strength, durability, wear resistance, and further high precision in meshing with the meshing object thereof and the like. Because of such requirements, reinforced fiber such as glass fiber is added to resin, which is a base material of the resin gear.

However, because the resin gear is formed in an injection molding step, when edges of the flowing dissolved resin merge into one another from two directions, the resin gear is weakened due to a thermal shock caused by the occurrence of a weld. On top of that, the glass fiber, which is added for the original purpose of ensuring the strength, durability and wear resistance of the resin gear itself, is exposed out of the gear surface, which quite probably results in breaking or wearing the meshing object made of metal.

### DISCLOSURE OF THE INVENTION

A resin gear according to the present invention is a resin gear to be meshed with a metal member, wherein crystalline resin is used for the base material and additives added to the base material include, in addition to one or more reinforced fibers selected from a group of carbon fiber (CF), glass fiber (GF) andalamido fiber (AF), one ormore crystalline nucleating agents selected from a group of talc, silicon carbide, carbon black and silica.

Talc is preferably selected for the crystalline nucleating agent, and a volume thereof added to the base material is 0.05 through 0.2 wt%.

A resin gear according to the present invention, wherein the crystalline resin is used for the base material and the additives added to the base material include not only the reinforced fiber but also the crystalline nucleating agent, successfully has an improved thermal shock resistance because a weld, which occurs at the time of resin molding, is more strengthened, and further, despite the glass fiber being added therein as reinforced fiber, the metal meshing object of the resin gear does not undergo breaking or wearing.

### BRIEF DESCRIPTION OF THE DRAWINGS

Fig. 1 a perspective view showing the outline of a gear device having employed a resin gear according to the present invention.
Fig. 2 is a side view showing a test piece used for a breakage test of a resin gear.

### DESCRIPTION OF A PREFERRED EMBODIMENT

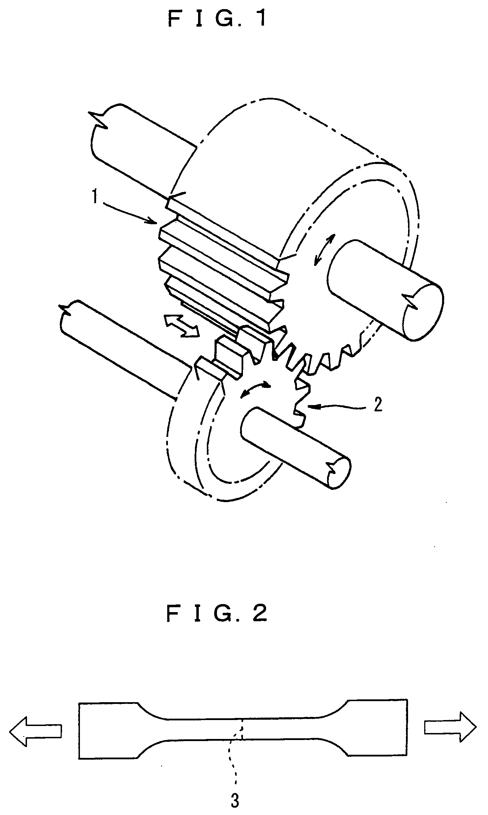

Referring to the drawings, wherein a preferred embodiment according to the present invention is illustrated, Fig. 1 shows a gear device having employed a resin gear according to the present invention. The gear device comprises a metal gear 1 supported in an axially located manner and a resin gear 2 meshed with the metal gear 1 and supported in an axially displaceable manner. A meshing object of the resin gear 2 is not limited to the metal gear 1.

The resin gear 2 is characterized in that crystalline resin is used for a base material thereof and additives added to the base material include not only reinforced fiber but also a crystalline nucleating agent and further preferably a solid lubricant. The resin gear 2, wherein the crystalline resin is used for the base material and additives added to the base material include not only the reinforced fiber but also the crystalline nucleating agent, has an improved thermal shock resistance because a weld, which occurs at the time of resin molding, is more strengthened. Further, the resin gear 2 is advantageous in that the metal meshing object thereof, despite the glass fiber being added therein as reinforced fiber, does not undergo breaking or wearing because the crystalline nucleating agent is added therein. Thus, the resin gear 2, which is capable of meeting such demands as improving its strength, maintaining its durability, ensuring its wear resistance and further ensuring a high precision in meshing with the meshing object thereof when used in severe environments in the range of the temperatures from -40°c through 120°c, which are regarded as a property of the reinforced fiber, can be provided.

For the crystalline resin used for the base material, one or more are selected from polyamide-based resins such as PA (polyamide) 6, PA66, PA 46, PA 12, PA11, PA6T, PA9T and the like and from a group of PPS (polyphenylene-sulfide), PPA (polyphthalamide), PBT (polybutylene terephthalate), PET (polyethylene terephthalate), PEEK (polyetheretherketone), PP (polypropylene).

For the reinforced fiber, one or more are selected from a group of carbon fiber (CF), glass fiber (GF) and alamido fiber (AF).

The volume of the reinforced fiber used, is 5 - 30 wt% when the carbon fiber (CF) is selected, 5 - 40 wt% when the glass fiber (GF) is selected and 5 - 20 wt% when the alamido fiber (AF) is selected.

When any of the reinforced fibers is used by a volume below the respective lower limits, the weld cannot be strengthened at an expected level, and when used by a volume over the respective upper limits, the weld is strengthened to the extent of its peak, and further an adverse effect is caused to the strengthening of the weld because volume rates of other components are relatively reduced.

The crystalline nucleating agent is an additive for promoting the crystallization of the crystalline resin, for which one or more are selected from a group of talc [Mg₃Si₄O₁₀(OH)₂], carbon carbide (SiC), carbon black (C) and silica (SiO₂).

The volume of the crystalline nucleating agent used is 0.05 - 0.2 wt% when the talc [Mg₃Si₄O₁₀(OH)₂] is selected, 0.05 - 1.0 wt% when the carbon carbide (SiC) is selected, 0.25 - 1.0 wt% when the carbon black (C) is selected and 0.05 - 1.0 wt% when the silica (SiO₂) is selected.

When any of the crystalline nucleating agents is used by a volume below the respective lower limits, the weld cannot be strengthened at an expected level, and when used by a volume over the respective upper limits, the weld is strengthened to the extent of its peak, and further an adverse effect is caused to the strengthening of the weld because volume rates of other components are relatively reduced.

For the solid lubricant, one or more are selected from a group of high density polyethylene (HDPE), ultrahigh molecular weight polyethylene (UHMWPE), and polytetrafluoroethylene (PTFE).

The volume of the solid lubricant used is 1 - 15 wt% when the high density polyethylene (HDPE) is selected, 1 - 15 wt% when the ultrahigh molecular weight polyethylene (UHMWPE) is selected and 5 - 30 wt% when the polytetrafluoroethylene (PTFE) is selected.

When any of the solid lubricant is used by a volume below the respective lower limits, the lubrication does not meet an expected level, and when used by a volume over the respective upper limits, the lubrication is achieved to the extent of its peak, and further an adverse effect is caused to the strength because volume rates of other components are relatively reduced.

A breakage test of the resin gear 2 is described. A test piece shown in Fig. 2 was used for the breakage test. The test piece according to the present invention and a test piece used for comparison to the present invention both contain: polyamide 66 as base material, the high density polyethylene (HDPE) by 5 wt% as solid lubricant and the glass fiber (GF) by 30 wt% as reinforced fiber. It is noted that the test piece according to the present invention contained the talc by 0.1 wt% as crystalline nucleating agent, while the comparison test piece did not contain the same. In both of the test pieces were intentionally created a weld 3, which is shown in a broken line in Fig. 2, for the purpose of the test evaluation.

A tensile load in arrow directions shown in Fig. 2 was repeatedly applied to both of the test pieces between the temperatures of -40 °c and 120 °c counting how many times the tensile load was applied until the test pieces were finally broken. The result of the test is that the tensile load was applied 200 times to the comparison test piece and 600 times to the test piece according to the present invention.

The breakage test of the resin gear 2 was further performed to another test piece according to the present invention, in which the same conditions as previously described were adopted with respect to the solid lubricant and reinforced fiber, while the crystalline nucleating agent alone was differently arranged. All the test pieces used were in the same shape as the foregoing (shown in Fig. 2). As a result, until the test piece according to the present invention was finallybroken, the tensile load was repeatedly applied thereto 450 times when, as crystalline nucleating agent, the carbon carbide was used by 1.0 wt% , 400 times when the carbon black was used by 0.2 wt% and 450 times when the silica was used by 1.0 wt%. When any of the foregoing crystalline nucleating agents was used, the repeating times of the tensile load application before the breakage of the test piece resulted in more than 200 times, which is the repeating times before the breakage of the comparison testpiece having no crystalline nucleating agent contained therein.

The present invention includes a resin gear having no solid lubricant added thereto. The following test piece was created for the breakage test based on the recognition that the carbon fiber can function as both reinforced fiber and solid lubricant. The polyamide 66 was used for a base material of the test piece, to which the carbon fiber by 30 wt% and the talc by 0.1 wt% were added. The tensile load was repeatedly applied to this test piece 550 times until finally broken.

The result of the test shows that when a suitable volume of the crystalline nucleating agent is added to the base material made of crystalline resin, the crystallization of the crystalline resin as base material can be accelerated, and the weld, which is the weakest part of the test piece, can be more strengthened to thereby control a probable breakage due to a thermal shock caused by the weld.

The present invention is effective when applied to a device, wherein the resin gear 2 has a diameter dimension of 90mm or more and a metal annular sleeve of 80mm or more in diameter dimension is formed in an inner periphery in an insert molding step, because the weld breakage is effectively prevented.

A resin gear according to the present invention is not subject to any particular restriction in terms of shape and structure and can be applied to a device or machine having adopted the resin gear therein.

### INDUSTRIAL APPLICABILITY

A resin gear according to the present invention can be applied to a gear for meshing with a meshing member made of metal. For example, the resin gear can be meshed with a ball screw of a CVT variable-speed gear to thereby drive the ball screw.

## Claims

1. A resin gear, a meshing object of which is made of metal,
wherein
crystalline resin is used for a base material and
one or more reinforced fibers selected from a group of carbon fiber (CF), glass fiber (GF) and alamido fiber (AF) and further one or more crystalline nucleating agents selected from a group of talc, carbon carbide, carbon black and silica are used as additives added to the base material.

2. A resin gear as claimed in Claim 1, wherein
a selected crystalline nucleating agent is talc and a volume of the talc added to the base material is 0.05 wt% through 0.2 wt%.

3. A resin gear as claimed in Claim 1, wherein
a selected crystalline nucleating agent is carbon carbide and a volume of the carbon carbide added to the base material is 0.05 wt% through 1.0 wt%.

4. A resin gear as claimed in Claim 1, wherein
a selected crystalline nucleating agent is carbon black and a volume of the carbon black added to the base material is 0.2 wt% through 0.25 wt%.

5. A resin gear as claimed in Claim 1, wherein
a selected crystalline nucleating agent is silica and a volume of the silica added to the base material is 0.05 wt% through 1.0 wt%.

6. A resin gear as claimed in Claim 1, wherein
a selected reinforced fiber is carbon fiber (CF) and a volume of the carbon fiber added to the base material is 5 wt% through 30 wt%.

7. A resin gear as claimed in Claim 1, wherein
a selected reinforced fiber is glass fiber (GF) and a volume of the glass fiber added to the base material is 5 wt% through 40 wt%.

8. A resin gear as claimed in Claim 1, wherein
a selected reinforced fiber is alamido fiber (AF) and a volume of the alamido fiber added to the base material is 5 wt% through 20 wt%.

9. A resin gear as claimed in Claim 1, wherein
one or more solid lubricants selected from a group of high density polyethylene (HDPE), ultrahigh molecular weight polyethylene (UHMWPE) and polytetrafluoroethylene (PTFE) are further used as additives added to the base material.

10. A resin gear, a meshing object of which is made of metal, wherein crystalline resin is used for a base material and talc by 0.05 wt% through 0.2 wt% and glass fiber by 5 wt% through 40 wt% are used as additives added to the base material.

11. A resin gear, a meshing object of which is made of metal,
wherein
crystalline resin is used for a base material,
crystalline nucleating agent, reinforced fiber and a solid lubricant are used as additives added to the base material, and
carbon fiber is used to function as both reinforced fiber and solid lubricant.
